# FASCICULE DE BREVET EUROPEEN

(11) **EP 2 733 020 B1**
(45) Date de publication et mention de la délivrance du brevet: **14.10.2015**
(21) Numéro de dépôt: 13191720.5
(22) Date de dépôt: 06.11.2013
(51) Int. Cl.: B60R 19/48, B60K 11/08, B60R 19/52

(54) **Grille d'entrée d'air pouvant recevoir un élément de support de capteur**
Lufteinlassgitter, in das ein Sensorhalterungselement eingebaut werden kann
Air-inlet screen capable of receiving a sensor-supporting element

(30) Priorité: 15.11.2012 FR 1260886
(43) Date de publication de la demande: 21.05.2014
(73) Titulaire: Faurecia Bloc Avant, 92000 Nanterre (FR)
(72) Inventeur: Verbrugghe, Jérôme, 90300 ELOIE (FR)
(74) Mandataire: Domenego, Bertrand

(56) Documents cités:
- EP-A1- 1 457 390
- DE-A1-102010 049 582
- FR-A1- 2 890 921
- FR-A1- 2 910 412

## Description

La présente invention concerne une grille d'entrée d'air de véhicule automobile, destinée à s'étendre en travers d'une ouverture d'aération d'un véhicule automobile, du type comprenant un cadre et une pluralité d'éléments de décoration attachés les uns aux autres et au cadre par des pattes de fixation, lesdits éléments de décoration s'étendant sensiblement transversalement en travers du cadre et définissant une pluralité d'ouvertures de passage de l'air, ledit cadre, lesdits éléments de décoration et lesdites pattes étant réalisés d'une seule pièce.

Les documents EP 1457390 A1, DE 10 2010 049582 A1, FR 2 890 921 A1 et FR 2 910 412 A1 décrivent une grille d'entrée d'air du type précité.

L'invention concerne également un procédé de réalisation d'une telle grille d'entrée d'air.

Une telle grille s'étend par exemple en travers d'une ouverture centrale formée dans la peau de pare-choc d'un véhicule permettant le passage de l'air de l'extérieur du véhicule vers les organes du véhicule présents sous le capot afin de permettre un refroidissement de ces organes.

La grille d'entrée d'air joue un rôle important dans l'esthétisme du véhicule dans la mesure où elle s'étend vers l'extérieur du véhicule et confère un style particulier à la peau de pare-chocs.

De plus en plus de véhicules sont en outre équipés de divers capteurs, permettant de donner certaines informations aux occupants du véhicule, par exemple la température extérieure ou la présence et la distance d'obstacles par rapport au véhicule ou permettre de visualiser l'environnement du véhicule afin de faciliter son stationnement. Ces capteurs sont par exemple fixés à la peau de pare-chocs.

En ce qui concerne le capteur d'aide au stationnement, celui-ci doit être placé près du sol et orienté vers l'extérieur du véhicule afin de permettre au conducteur de visualiser une zone pertinente permettant de l'assister lorsqu'il stationne le véhicule. La grille d'entrée d'air forme un endroit idéal pour positionner un tel capteur, formé par exemple par une caméra permettant de visualiser la zone s'étendant en avant du pare-chocs du véhicule.

Cependant, l'intégration de ce capteur dans la grille d'entrée d'air est généralement complexe et ne permet pas d'obtenir un esthétisme satisfaisant à moins de créer une grille spécifique intégrant un support de capteur, ce qui rend une telle grille coûteuse. En outre, une telle grille spécifique n'est produite que pour des véhicules possédant une fonction d'aide au stationnement et n'est pas destinée à être utilisée avec des véhicules ne possédant cette fonction, pour lesquels une autre grille doit donc être produite.

En variante, un support de capteur peut être fixé à la grille au moyens de plusieurs pièces de fixation, ce qui réduit l'esthétisme offert par la grille et complique le montage du capteur.

L'un des buts de l'invention est de pallier les inconvénients ci-dessus en proposant une grille d'entrée d'air pouvant recevoir ou non un support de capteur de façon esthétique et sans augmenter le prix de revient de la grille.

A cet effet, l'invention concerne une grille d'entrée d'air du type précité, dans laquelle au moins un élément de support de capteur est fixé sur ladite grille, ledit élément de support étant fixé à au moins une patte de fixation s'étendant à partir d'un élément de décoration et/ou à partir du cadre.

Le support de capteur peut être fixé ou non à la grille, selon que le véhicule doit avoir la fonction d'aide au stationnement ou non, ce qui permet de ne pas réaliser une grille spécifique pour chaque véhicule tout en gardant une grille réalisée d'une seule pièce.

Selon d'autres caractéristiques de la grille d'entrée d'air selon l'invention :
- l'élément de support s'étend sensiblement transversalement en travers du cadre dans la continuité des éléments de décoration ;
- l'élément de support est fixé à une patte de fixation s'étendant à partir d'un premier élément de décoration vers le cadre et à au moins une patte de fixation s'étendant à partir du cadre vers ledit premier élément de décoration ;
- l'élément de support est en outre fixé à une patte de fixation s'étendant à partir d'un deuxième élément de décoration vers le cadre, ledit deuxième élément de décoration étant adjacent au premier élément de décoration ;
- le cadre et/ou au moins un élément de décoration comprennent au moins une languette s'étendant sensiblement longitudinalement à partir dudit cadre et/ou dudit élément de décoration, ladite languette étant introduite dans une ouverture correspondante de l'élément de support ;
- au moins un des éléments de décoration est sécable et peut être séparé de la grille, l'élément de support étant fixé à ladite grille en lieu et place dudit élément de décoration sécable ;
- l'élément de support est soudé à la grille d'entrée d'air ; et
- l'élément de support comprend au moins un orifice, un capteur d'aide au stationnement étant fixé sur la périphérie dudit orifice et s'étendant au moins en partie dans ledit orifice.

L'invention concerne également un procédé de réalisation d'une grille d'entrée d'air, telle que décrite ci-dessus, le procédé comprenant les étapes suivantes :
- réaliser d'une seule pièce le cadre, les éléments de décoration et les pattes de fixation de la grille,
- découper un desdits éléments de décoration de sorte à dégager un espace dans la grille et à libérer une partie des pattes de fixation dudit élément de décoration découpé,
- fixer un élément de support portant un capteur en lieu et place de l'élément de décoration découpé à au moins une des parties de patte de fixation libérée.

Un tel procédé permet d'intégrer le support de capteur de façon simple et esthétique dans la grille d'entrée d'air, tout en conservant une grille utilisable pour des véhicules ne présentant pas la fonction d'aide au stationnement si l'élément de décor n'est pas retiré de la grille.

Selon une autre caractéristique du procédé de réalisation selon l'invention, l'élément de support est en outre soudé à la grille.

D'autres aspects et avantages de l'invention apparaîtront à la lecture de la description qui suit, donnée à titre d'exemple et fait en référence aux dessins annexés, dans lesquels :
- la Fig. 1 est une représentation schématique en perspective d'une grille d'entrée d'air selon l'invention vue de l'avant, un élément de support de capteur étant intégré à ladite grille,
- la Fig. 2 est une représentation schématique en perspective de la grille d'entrée d'air de la Fig. 1, vue de l'arrière, et
- la Fig. 3 est une représentation schématique en perspective de la grille d'entrée d'air de la Fig. 1, l'élément de support de capteur ayant été retiré.

Dans la description, le terme « longitudinal » est défini selon la direction avant-arrière d'un véhicule automobile monté. Le terme « transversal » est défini selon un plan sensiblement perpendiculaire à la direction longitudinale. Les termes « avant » et « arrière » sont définis par rapport à la direction longitudinale selon les directions usuelles d'un véhicule automobile monté.

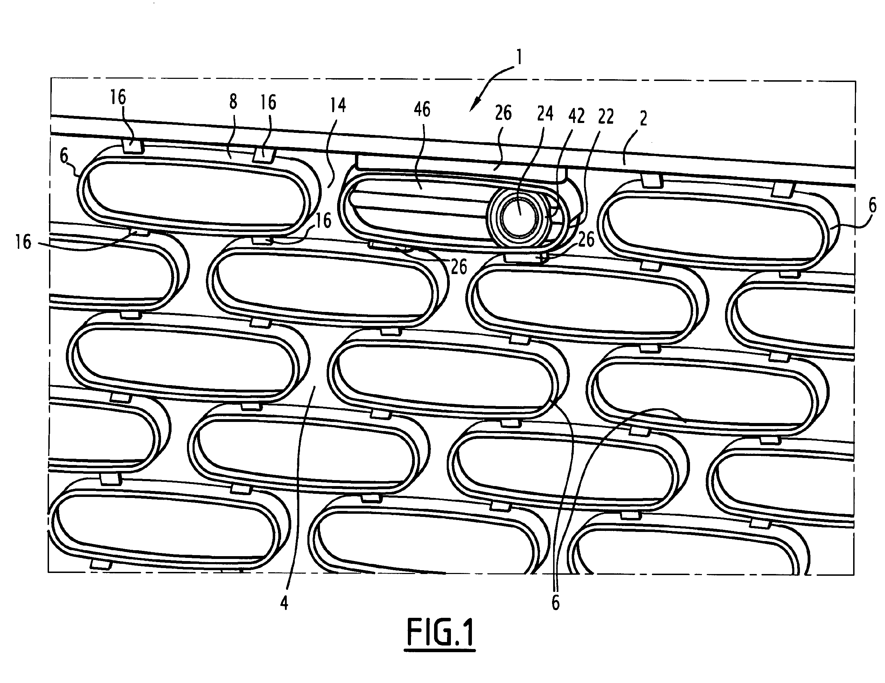

En référence à la Fig. 1, on décrit une grille d'entrée d'air 1 de véhicule automobile, destinée à s'étendre en travers d'une ouverture d'aération d'un véhicule automobile par exemple formée dans une peau de pare-chocs (non représentée) et s'étendant dans un plan sensiblement transversal. De façon connue, la grille 1 est par exemple réalisée d'une seule pièce en matériau plastique injecté ou moulé.

La grille 1 comprend un cadre 2 délimitant une ouverture centrale 4 destinée à s'étendre en regard de l'ouverture d'aération du véhicule et présentant sensiblement la même forme que cette ouverture d'aération. Ainsi, le cadre 2 présente une forme sensiblement complémentaire de celle de la périphérie de l'ouverture d'aération et est adapté pour être fixé à cette périphérie, par exemple par emboîtement, clipsage, vissage ou autre. Le cadre présente par exemple une forme sensiblement rectangulaire ou ovoïde. D'autres formes peuvent bien entendu être envisagées.

L'ouverture centrale 4 est partiellement obturée par une pluralité d'éléments de décoration 6, agencés pour empêcher des objets, tels que des pierres ou autres, ou des déchets de pénétrer dans l'ouverture d'aération du véhicule, tout en laissant l'air pénétrer dans cette ouverture.

La forme des éléments de décoration 6 représentés sur les figures est purement illustrative et donnée à titre d'exemple non limitatif, d'autres formes pouvant, bien entendu, être envisagées. Selon l'exemple représenté sur les figures, chaque élément de décoration 6 comprend un cadre 8, par exemple de forme sensiblement ovoïde ou rectangulaire ou autre, s'étendant sensiblement transversalement. Selon diverses variantes, le cadre 8 peut être plein ou non et comprendre ou non des motifs, des éléments enjoliveurs ou autre s'étendant à l'intérieur du cadre. Les éléments de décoration 6 sont espacés les uns des autres de sorte à laisser des passages 14 entre les éléments de décoration 6. Comme indiqué précédemment, la forme et les dimensions des éléments de décoration 6, ainsi que l'espacement entre les éléments de décoration sont agencés pour permettre à l'air de passer à travers la grille 1, tout en empêchant des objets volumineux, tels que des pierres ou des déchets, de passer. Ainsi, la forme des éléments de décoration 6 peut être différente de celle décrite ci-dessus mais leur agencement doit permettre de réaliser les fonctions de passage de l'air et de blocage des objets indésirables.

Selon le mode de réalisation représenté sur les figures, les éléments de décoration 6 forment un réseau régulier en travers de l'ouverture centrale 4. Les éléments de décoration 6 sont fixés entre eux, et, pour les éléments 6 adjacents au cadre 2 de la grille 1, au cadre 2 par des pattes de fixation 16. Les pattes de fixation 16 s'étendant à partir d'un élément de décoration 6 s'étendent donc vers le cadre 2 de la grille et les pattes de fixation 16 s'étendant à partir du cadre 2 s'étendent vers l'intérieur de la grille vers les éléments de décoration 6. Selon le mode de réalisation représenté sur les figures, un élément de décoration 6 adjacent au cadre 2 de la grille 1 est fixé à celui-ci par deux pattes de fixation 16 s'étendant en saillie de l'un des grands bords de son cadre 8. Deux pattes de fixation 16 s'étendent en saillie de l'autre grand bord du cadre 8 et sont fixées, respectivement, à un élément de décoration 6 adjacent s'étendant sous ledit élément de décoration 6. Un élément de décoration 6 non adjacent au cadre 2 de la grille 1 est fixé à quatre éléments de décoration 6 adjacents, respectivement par une patte de fixation 16 s'étendant des grands bords de son cadre 8. Ainsi, chaque élément de décoration 6 est fixé à son environnement par quatre pattes de fixation 16. Il est bien entendu envisageable de réduire ou d'augmenter le nombre de pattes de fixation 16 de chaque élément de décoration 6 en fonction de la forme et de l'agencement de la grille 1 et de ses éléments de décoration 6.

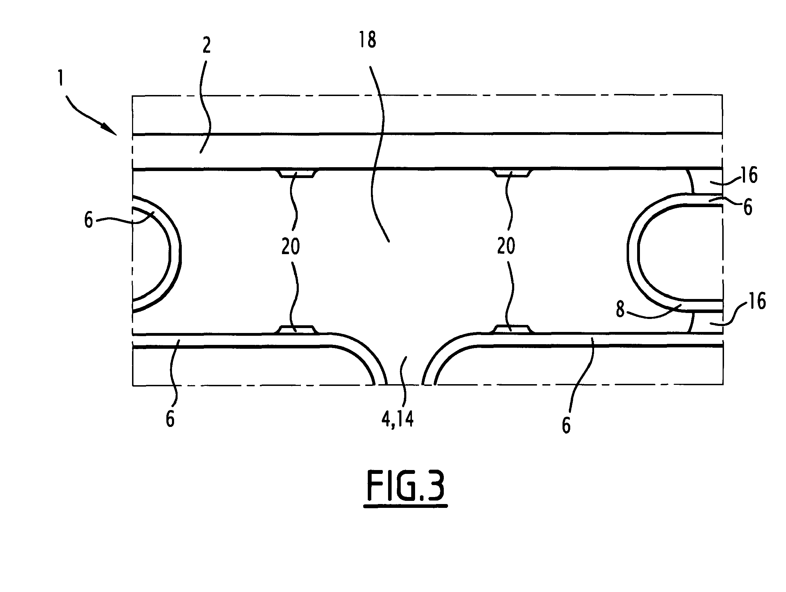

Comme représenté sur la Fig. 3, au moins un des éléments de décoration 6, par exemple un élément adjacent au cadre 2, est enlevé de la grille 1 afin de libérer un espace 18 correspondant. Cette opération est réalisée par exemple par découpage des pattes de fixation 16 de l'élément de décoration 6 enlevé reliant cet élément de décoration 6 à des éléments de décoration 6 adjacents et/ou au cadre 2 de la grille 1. Les pattes de fixation 16 sont donc sécables et peuvent être coupées en deux, une partie des pattes 16 restant solidaires de l'élément de décoration 6 enlevé et l'autre partie 20 des pattes 16 restant solidaires du cadre 2 et/ou des éléments de décoration 6 adjacents, comme représenté sur la Fig. 3.

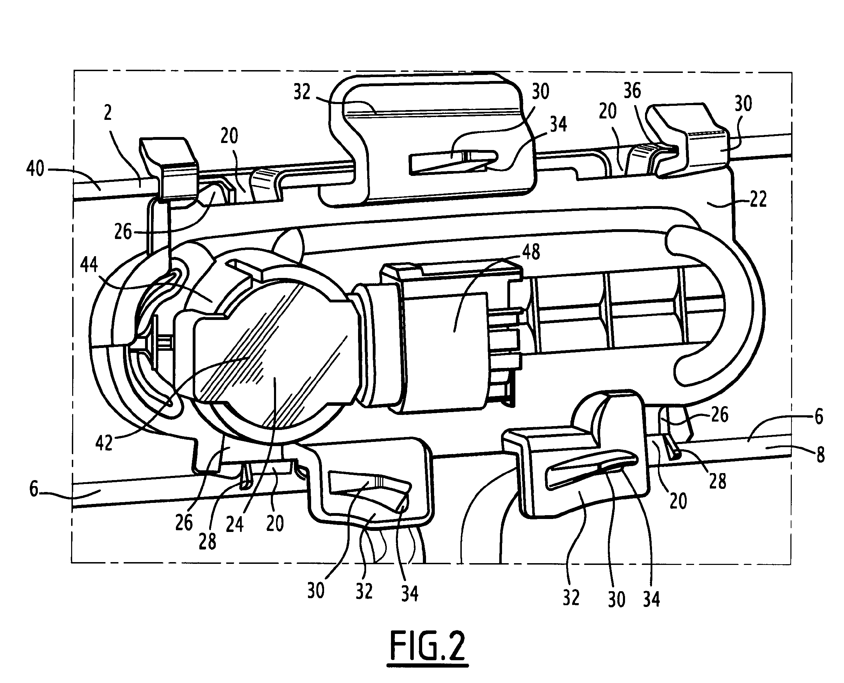

Les parties 20 de pattes 16 restant solidaires du cadre 2 et/ou des autres éléments de décoration 6 sont utilisées pour fixer un élément de support 22 rapporté sur la grille 1 en lieu et place de l'élément de décoration enlevé, comme représenté sur les Fig. 1 et 2.

L'élément de support 22 est par exemple un support de capteur 24 d'aide au stationnement, formé par exemple par une caméra ou par un capteur de détection de la présence d'un obstacle. D'autres types de capteurs peuvent être prévus sur l'élément de support, tels qu'un capteur de température, ou autre. L'élément de support 22 pourrait également être prévu pour supporter autre chose qu'un capteur, tel qu'un enjoliveur particulier ou autre.

L'élément de support 22 est formé par une pièce en matériau plastique présentant par exemple un contour extérieur similaire à celui des éléments de décoration 6, comme représenté sur la Fig. 1. Ainsi, l'élément de support 22 s'intègre bien dans la grille 1 et ne nuit pas à l'esthétisme de celle-ci, puisque l'élément de support 22 apparaît comme un élément de décoration 6 parmi les autres.

L'élément de support 22 occupe l'espace 18 en lieu et place de l'élément de décoration 6 enlevé. Ainsi, l'élément de support 22 s'étend sensiblement transversalement en travers du cadre 8 dans la continuité des éléments de décoration 6 et s'intègre de façon esthétique à la grille 1.

Lorsque l'élément de support 22 est fixé à la place d'un élément de décoration 6 adjacent au cadre 2 de la grille 1, l'élément de support 22 est donc fixé à deux parties 20 de pattes 16 s'étendant à partir du cadre 2 vers les éléments de décoration 6, à une partie 20 de patte 16 s'étendant à partir d'un premier élément de décoration 6 vers le cadre 2 et à une partie 20 de patte 16 s'étendant à partir d'un deuxième élément de décoration 6 vers le cadre 2, le premier élément de décoration 6 étant adjacent au deuxième élément de décoration, comme représenté sur la Fig. 1.

Comme indiqué précédemment, l'élément de support 22 est fixé à la grille 1 par les parties 20 de pattes 16 restant solidaires de la grille 1 suite au découpage des pattes de fixation 16 de l'élément de décoration 6 enlevé. A cet effet, l'élément de support 22 comprend des logements 26 de réception des parties 20 de pattes de fixation 16, comme représenté plus particulièrement sur la Fig. 2. Les logements 26 sont adaptés pour s'emboîter sur les parties 20 de pattes 16 en poussant l'élément de support 22 de l'arrière vers l'avant, c'est-à-dire en faisant passer l'élément de support 22 par l'intérieur de la grille 1. Lors de ce passage, les logements 26 passent en force les parties 20 de pattes 16 et se « clipsent » sur celles-ci, de sorte à assurer la fixation de l'élément de support 22 sur la grille 1.

Pour faciliter l'introduction des logements 26 sur les parties 20 de pattes 16, ces parties 20 comprennent chacune au moins une nervure de guidage 28 s'étendant à partir du cadre 2 ou du cadre 8 d'un élément de décoration 6 et inclinée de l'arrière vers l'avant, comme représenté sur la Fig. 2. De telles nervures 28 facilitent le passage des logements 26 au-delà des parties 20 de pattes de l'arrière vers l'avant et participe au maintien de l'élément de support 22 sur la grille 1.

Chaque élément de décoration 6 adjacent à l'espace 18, et le cas échéant le cadre 2 de la grille 1 lorsque l'espace 18 est adjacent à ce cadre 2, comprend une languette 30 qui s'étend sensiblement longitudinalement de l'avant vers l'arrière à partir du cadre 8 de l'élément de décoration 6, ou le cas échéant du cadre 2, au voisinage de l'espace 18, comme représenté sur la Fig. 2. L'élément de support 22 comprend des pattes 32 s'étendant transversalement sur la périphérie de l'élément de support 22 et comprenant chacune une ouverture 34 correspondant à une languette 30. Ainsi, lorsque l'élément de support 22 est fixé sur la grille 1, les languettes 30 s'engagent dans les ouvertures 34 correspondantes. La coopération des languettes 30 avec les ouvertures 34 permet de gérer l'isostatisme de l'élément de support 22 par rapport aux éléments de décoration 6 adjacents et le cas échéant par rapport au cadre 2 de la grille 1. On assure ainsi un bon positionnement et alignement de l'élément de support 22 par rapport au reste de la grille 1 lors du montage de l'élément de support 22.

L'élément de support 22 peut comprendre d'autres moyens de positionnement et de fixation à la grille 1, tels que des rainures 36 prévues sur des pattes 38 et agencées pour s'engager sur un rebord 40 formé sur la partie arrière du cadre 2 de la grille 1, comme représenté sur la Fig. 2.

La fixation définitive de l'élément de support 22 est par exemple réalisée par soudure, par exemple par soudure par ultrasons. Les logements 26 et/ou les ouvertures 34 peuvent être soudées aux parties 20 de pattes 16 et/ou aux languettes 30 respectivement.

Selon le mode de réalisation représenté sur les Fig. 1 et 2, l'élément de support 22 comprend un orifice 42, dans lequel le capteur 24 est introduit et maintenu par une paroi 44 délimitant l'orifice 42. L'orifice 42 est réalisé dans une paroi 46 pleine, permettant de masquer la connectique 48 du capteur 24 depuis l'extérieur de la grille 1. L'orifice 42 permet le passage de la surface de détection du capteur 24 vers l'avant et l'extérieur de la grille 1, comme représenté sur la Fig. 1.

La grille 1 décrite ci-dessus permet de prévoir ou non un support de capteur de façon simple et sans avoir à réaliser une grille spécifique lorsqu'un tel capteur est prévu. Ainsi, la grille 1 peut être identique pour plusieurs modèles de véhicules, que ceux-ci prévoient la présence d'un capteur ou non sur la grille. En outre, l'emplacement de ce capteur peut être choisi simplement en sélectionnant l'élément de décoration à enlever. Ainsi, on peut par exemple choisir de placer le capteur vers le haut de la grille ou vers le bas en fonction de la hauteur à laquelle est placée la grille par rapport au sol lorsqu'elle est montée sur le véhicule. Plusieurs supports peuvent être montés sur la grille en enlevant un nombre correspondant d'éléments de décoration. Le montage de l'élément de support est simple et rapide et le maintien du capteur ne nécessite pas plusieurs pièces séparées à rapporter sur la grille 1.

## Revendications

1. Grille (1) d'entrée d'air de véhicule automobile, destinée à s'étendre en travers d'une ouverture d'aération d'un véhicule automobile, ladite grille comprenant un cadre (2) et une pluralité d'éléments de décoration (6) attachés les uns aux autres et au cadre (2) par des pattes de fixation (16), lesdits éléments de décoration (6) s'étendant sensiblement transversalement en travers du cadre (2) et définissant une pluralité d'ouvertures (14) de passage de l'air, ledit cadre (2), lesdits éléments de décoration (6) et lesdites pattes (16) étant réalisés d'une seule pièce, au moins un élément de support (22) de capteur étant fixé sur ladite grille (1), **caractérisé en ce que** l'élément de support (22) est fixé à une patte de fixation (16) s'étendant à partir d'un premier élément de décoration (6) vers le cadre (2) et à au moins une patte de fixation (16) s'étendant à partir du cadre (2) vers ledit premier élément de décoration (6).

2. Grille d'entrée d'air selon la revendication 1, **caractérisé en ce que** l'élément de support (22) s'étend sensiblement transversalement en travers du cadre (8) dans la continuité des éléments de décoration (6).

3. Grille d'entrée d'air selon la revendication 1 ou 2, **caractérisé en ce que** l'élément de support (22) est en outre fixé à une patte de fixation (16) s'étendant à partir d'un deuxième élément de décoration (6) vers le cadre (2), ledit deuxième élément de décoration (6) étant adjacent au premier élément de décoration (6).

4. Grille d'entrée d'air selon l'une quelconque des revendications 1 à 3, **caractérisé en ce que** le cadre (2) et/ou au moins un élément de décoration (6) comprennent au moins une languette (30) s'étendant sensiblement longitudinalement à partir dudit cadre (2) et/ou dudit élément de décoration (6), ladite languette (30) étant introduite dans une ouverture (34) correspondante de l'élément de support (22).

5. Grille d'entrée d'air selon l'une quelconque des revendications 1 à 4, **caractérisé en ce que** au moins un des éléments de décoration (6) est sécable et peut être séparé de la grille (1), l'élément de support (22) étant fixé à ladite grille en lieu et place dudit élément de décoration (6) sécable.

6. Grille d'entrée d'air selon l'une quelconque des revendications 1 à 5, **caractérisé en ce que** l'élément de support (22) est soudé à la grille d'entrée d'air.

7. Grille d'entrée d'air selon l'une quelconque des revendications 1 à 6, **caractérisé en ce que** l'élément de support (22) comprend au moins un orifice (42), un capteur (24) d'aide au stationnement étant fixé sur la périphérie dudit orifice (42) et s'étendant au moins en partie dans ledit orifice (42).

8. Procédé de réalisation d'une grille d'entrée d'air selon l'une des revendications 1 à 7, comprenant les étapes suivantes :
- réaliser d'une seule pièce le cadre (2), les éléments de décoration (6) et les pattes de fixation de la grille (16),
- découper un desdits éléments de décoration (6) de sorte à dégager un espace (18) dans la grille et à libérer une partie (20) des pattes de fixation (16) dudit élément de décoration (6) découpé,
- fixer un élément de support (22) portant un capteur (24) en lieu et place de l'élément de décoration (6) découpé à au moins une des parties (20) de patte de fixation (16) libérée.

9. Procédé selon la revendication 8, **caractérisé en ce que** l'élément de support (22) est en outre soudé à la grille (1).

## Patentansprüche

1. Kraftfahrzeuglufteintrittsgitter (1), das dazu bestimmt ist, sich über eine Belüftungsöffnung eines Kraftfahrzeugs zu erstrecken, wobei das Gitter einen Rahmen (2) und mehrere Dekorelemente (6) aufweist, die aneinander und am Rahmen (2) durch Befestigungslaschen (16) angebracht sind, wobei sich die Dekorelemente (6) im Wesentlichen quer über den Rahmen (2) erstrecken und eine Vielzahl von Öffnungen (14) zum Luftdurchtritt bilden, wobei der Rahmen (2), die Dekorelemente (6) und die Laschen (16) einstückig hergestellt sind, wobei zumindest ein Sensorhalterungselement (22) am Gitter (1) befestigt ist, **dadurch gekennzeichnet, dass** das Halterungselement (22) an einer Befestigungslasche (16), die sich ausgehend von einem ersten Dekorelement (6) zum Rahmen (2) hin erstreckt und an mindestens einer Befestigungslasche (16) befestigt ist, die sich ausgehend vom Rahmen (2) zum ersten Dekorelement (6) hin erstreckt.

2. Lufteintrittsgitter nach Anspruch 1, **dadurch gekennzeichnet, dass** sich das Halterungselement (22) in der Fortsetzung der Dekorelemente (6) im Wesentlichen quer über den Rahmen (8) erstreckt.

3. Lufteintrittsgitter nach Anspruch 1 oder 2, **dadurch gekennzeichnet, dass** das Halterungselement (22) darüber hinaus an einer Befestigungslasche (16) befestigt ist, die sich ausgehend von einem zweiten Dekorelement (6) zum Rahmen (2) hin erstreckt, wobei das zweite Dekorelement (6) an das erste Dekorelement (6) angrenzt.

4. Lufteintrittsgitter nach einem der Ansprüche 1 bis 3, **dadurch gekennzeichnet, dass** der Rahmen (2) und/oder zumindest ein Dekorelement (6) mindestens eine Zunge (30) umfasst/umfassen, die sich ausgehend vom Rahmen (2) und/oder vom Dekorelement (6) im Wesentlichen der Länge nach erstreckt, wobei die Zunge (30) in eine entsprechende Öffnung (34) des Halterungselements (22) eingeführt ist.

5. Lufteintrittsgitter nach einem der Ansprüche 1 bis 4, **dadurch gekennzeichnet, dass** mindestens eines der Dekorelemente (6) ablösbar ist und vom Gitter (1) getrennt werden kann, wobei das Halterungselement (22) anstatt und anstelle des ablösbaren Dekorelements (6) am Gitter befestigt wird.

6. Lufteintrittsgitter nach einem der Ansprüche 1 bis 5, **dadurch gekennzeichnet, dass** das Halterungselement (22) an das Lufteintrittsgitter angeschweißt ist.

7. Lufteintrittsgitter nach einem der Ansprüche 1 bis 6, **dadurch gekennzeichnet, dass** das Halterungselement (22) mindestens eine Öffnung (42) aufweist, wobei ein Parkunterstützungssensor (24) am Umfang der Öffnung (42) befestigt ist und sich zumindest teilweise in die Öffnung (42) erstreckt.

8. Verfahren zur Herstellung eines Lufteintrittsgitters nach einem der Ansprüche 1 bis 7, die folgenden Schritte umfassend:
- einstückiges Herstellen des Rahmens (2), der Dekorelemente (6) und des Befestigungslaschen (16) des Gitters,
- Ausschneiden eines der Dekorelemente (6), und zwar so, dass ein Raum (18) im Gitter freigelegt und ein Teil (20) der Befestigungslaschen (16) des ausgeschnittenen Dekorelements (6) freigesetzt wird,
- Befestigen eines einen Sensor (24) haltenden Halterungselements (22) anstatt und anstelle des ausgeschnittenen Dekorelements (6) an mindestens einem der Teile (20) der freigesetzten Befestigungslasche (16).

9. Verfahren nach Anspruch 8, **dadurch gekennzeichnet, dass** das Halterungselement (22) darüber hinaus am Gitter (1) angeschweißt wird.

## Claims

1. Air inlet grille (1) for an automotive vehicle, designed to extend across a ventilation opening of an automotive vehicle, said grille comprising a frame (2) and a plurality of decoration elements (6) attached to one another and to the frame (2) by fixing lugs (16), said decoration elements (6) extending substantially transversely across the frame (2) and defining a plurality of openings (14) providing a passage for air, said frame (2), said decoration elements (6) and said lugs (16) being made from a single piece, at least one sensor support element (22) being affixed to said grille (1), **characterised in that** the support element (22) is affixed to a fixing lug (16) extending from a first decoration element (6) towards the frame (2) and to at least one fixing lug (16) extending from the frame (2) towards said first decoration element (6).

2. Air inlet grille as claimed in claim 1, **characterised in that** the support element (22) extends substantially transversely across the frame (8) in alignment with the decoration elements (6).

3. Air inlet grille as claimed in claim 1 or 2, **characterised in that** the support element (22) is additionally affixed to a fixing lug (16) extending from a second decoration element (6) towards the frame (2), said second decoration element (6) being adjacent to the first decoration element (6).

4. Air inlet grille as claimed in any one of claims 1 to 3, **characterised in that** the frame (2) and/or at least one decoration element (6) comprise at least one tab (30) extending substantially longitudinally from said frame (2) and/or said decoration element (6), said tab (30) being introduced into a corresponding opening (34) of the support element (22).

5. Air inlet grille as claimed in any one of claims 1 to 4, **characterised in that** at least one of the decoration elements (6) is breakable and can be severed from the grille (1), the support element (22) being affixed to said grille instead and in place of said breakable decoration element (6).

6. Air inlet grille as claimed in any one of claims 1 to 5, **characterised in that** the support element (22) is welded to the air inlet grille.

7. Air inlet grille as claimed in any one of claims 1 to 6, **characterised in that** the support element (22) comprises at least one orifice (42), a parking aid sensor (24) being secured on the periphery of said orifice (42) and extending at least partially through said orifice (42) .

8. Method of producing an air inlet grille as claimed in one of claims 1 to 7, comprising the following steps:
- producing the frame (2), decoration elements (6) and grille fixing lugs (16) from a single piece,
- cutting off one of said decoration elements (6) so as to make free a space (18) in the grille and to free a part (20) of the fixing lugs (16) of said cut decoration element (6),
- affixing a support element (22) bearing a sensor (24) instead and in place of the cut decoration element (6) to at least one of the parts (20) of the fixing lug (16) left free.

9. Method as claimed in claim 8, **characterised in that** the support element (22) is additionally welded to the grille (1).
